# FASCICULE DE BREVET EUROPEEN

(11) **EP 1 517 966 B1**
(45) Date de publication et mention de la délivrance du brevet: **29.06.2011**
(21) Numéro de dépôt: 03755208.0
(22) Date de dépôt: 27.05.2003
(51) Int. Cl.: C09D 5/02, C09D 7/12, C09D 5/32

(54) **COMPOSITION A BASE D'UNE PEINTURE AQUEUSE, NOTAMMENT D'UNE LASURE OU D'UN VERNIS ET D'UNE DISPERSION COLLOIDALE AQUEUSE DE CERIUM**
WASSERLACK, INSBESONDERE LASUR ODER FIRNIS, SOWIE WÄSSRIG KOLLOIDALE DISPERSION DES CERS
AQUEOUS PAINT COMPOSITION, PARTICULARLY A LACQUER OR A VARNISH AND AN AQUEOUS COLLOIDAL DISPERSION OF CERIUM

(30) Priorité: 28.05.2002 FR 0206498
(43) Date de publication de la demande: 30.03.2005
(73) Titulaire: Rhodia Electronics and Catalysis, 17041 La Rochelle Cedex (FR)
(72) Inventeur: BOUSSEAU, Jean-Noel, F-75019 Paris (FR); FAUCHADOUR, David, F-75011 Paris (FR); TOLLA, Bruno, F-75005 Paris (FR)
(74) Mandataire: Dubruc, Philippe
(86) Numéro de dépôt international: PCT/FR2003/001595
(87) Numéro de publication internationale: WO 2003/099942

(56) Documents cités:
- EP-A- 0 732 356
- WO-A-98/01392
- US-A- 5 175 202
- US-A- 5 922 330

## Description

La présente invention concerne une composition à base d'une peinture aqueuse, notamment d'une lasure ou d'un vernis, et d'une dispersion colloïdale aqueuse de cérium.

De nombreuses substances sont actuellement utilisées dans l'industrie du meuble, de la menuiserie, du parquet et de la construction pour protéger le bois des dégradations dues à la lumière et aux intempéries notamment. On sait que les rayonnements UV combinés avec l'eau et l'oxygène ont pour effet de décolorer rapidement celui-ci. Par ailleurs, lorsque le bois est utilisé tout particulièrement à l'extérieur il est aussi nécessaire de le protéger contre le développement d'algues, de champignons et de divers micro-organismes.

Les peintures et notamment les lasures et les vernis sont couramment employés pour une telle protection du bois.

Toutefois, les lasures et vernis connus, qui sont des formules complexes à base de produits organiques comme des complexes d'isocyanates par exemple, de produits minéraux comme les oxydes de fer, ou encore d'additifs protecteurs comme les absorbeurs UV (benzotriazole par exemple) présentent une durabilité ou un effet de protection vis à vis des UV qui n'est pas totalement satisfaisante. Les absorbeurs UV organiques peuvent en effet se dégrader dans le temps, ils peuvent migrer en surface ou être lessivés par les intempéries. Les absorbeurs UV minéraux connus comme les dioxydes de titane nécessitent d'être utilisés dans des concentrations suffisamment élevées pour être efficaces vis à vis des UV mais l'augmentation des concentrations se fait au détriment de la transparence, de la tenue à l'eau ou de la tenue mécanique du vernis ou de la lasure. Par ailleurs, on note un développement de plus en plus important des formulations réticulables aux UV. Or, les absorbeurs UV organiques, peuvent bloquer la réticulation des formulations lors de leur application sur le bois.

Enfin, pour des raisons écologiques et de simplicité d'emploi, il y a une demande de plus en plus pressante pour des formulations aqueuses pour lesquelles les solutions développées pour des formulations organiques ne sont pas transposables.

Il y a donc un besoin pour des peintures et des lasures ou vernis aqueux à durabilité plus élevée. Ce besoin existe non seulement dans l'industrie du bois comme indiqué plus haut mais aussi dans d'autres domaines comme la cosmétique, la protection d'encres, de fibres ou de tissus, de pigments photosensibles ou plus généralement de tout volume situé derrière une surface demandant à être protégée des actions nuisibles des UV, de l'eau et de l'oxygène ou de l'un de ces éléments.

L'objet de l'invention est donc d'améliorer cette durabilité.

Dans ce but, la composition de l'invention est caractérisée en ce qu'elle comprend le mélange d'une peinture aqueuse et d'une dispersion colloïdale aqueuse d'un composé de cérium, cette dispersion présentant un pH d'au moins 7 et comprenant un acide organique ayant au moins trois fonctions acides et dont le troisième pK est d'au plus 10 ou un sel de cet acide, et de l'ammoniaque ou une amine.

Les compositions de l'invention qui incorporent une telle dispersion colloïdale présentent une tenue à l'eau et une tenue mécanique qui sont améliorées, ce qui augmente ainsi leur durée de vie ou la durée de leur présence sur le substrat qu'elles protègent. Leur tenue au vieillissement peut être aussi augmentée.

Par ailleurs, dans le cas des compositions à base de résines alkydes en émulsion, la dispersion colloïdale selon l'invention a un effet siccatif, c'est à dire qu'elle joue le rôle de catalyseur de réticulation.

En outre, la présence d'une dispersion colloïdale selon l'invention permet de conserver les avantages décrits plus haut même dans les compositions réticulables aux UV.

D'autres caractéristiques, détails et avantages de l'invention apparaîtront encore plus complètement à la lecture de la description qui va suivre, ainsi que des divers exemples concrets mais non limitatifs destinés à l'illustrer.

Dans la présente description le terme « peinture » est employé au sens large pour désigner tout revêtement de nature polymérique déposé sur un substrat et pouvant avoir notamment une fonction de protection de celui-ci, et plus particulièrement pour désigner les peintures aqueuses à proprement parler, les vernis et les lasures. Les termes « lasure » et « vernis » ont le sens habituel dans le domaine technique concerné ici. On précisera pour la lasure qu'il s'agit généralement d'une formulation ou composition transparente ou semi-transparente appliquée sur le bois ou sur le substrat et destinée à le protéger et dont la teneur en extrait sec peut être de l'ordre de 10% en poids ou de l'ordre de 40% à 50% en poids selon qu'il s'agit d'une lasure primaire ou de finition. Pour le vernis il s'agit d'une formulation ou d'une composition plus concentrée que la lasure.

On peut citer ainsi comme peintures concernées par la présente invention, les peintures à base des résines en émulsion suivantes : résines alkydes dont la plus courante est dénommée glycérophtalique; les résines modifiées à l'huile longue ou courte; les résines acryliques dérivées des esters de l'acide acrylique (méthylique ou éthylique) et méthacrylique éventuellement copolymérisés avec l'acrylate d'éthyle, d'éthyl-2 hexyle ou de butyle ainsi que les résines acryliques-isocyanates; les résines vinyliques comme par exemple l'acétate de polyvinyle, le chlorure de polyvinyle, le butyralpolyvinylique, le formalpolyvinylique, et les copolymères chlorure de vinyle et acétate de vinyle ou chlorure de vinylidène; les résines aminoplastes ou phénoliques le plus souvent modifiées; les résines polyesters; les résines polyuréthannes; les résines époxy; les résines silicones; les résines cellulosiques ou nitrocellulosiques.

L'invention s'applique d'une manière générale à tout type de peintures aqueuses, notamment à tout type de lasures ou de vernis, utilisées sur tout substrat. Ce substrat peut être notamment le bois ou les métaux, dans ce dernier cas par exemple l'invention peut s'appliquer aux peintures pour automobiles. Le substrat peut aussi être un verre, du type des verres utilisés dans le bâtiment ou des verres destinés à contenir des produits ou des matériaux photo-sensibles. D'autres substrats possibles sont les revêtements protecteurs d'emballage organiques ou minéraux, notamment lorsque l'on cherche à conserver la transparence dans le domaine de la lumière visible. Comme autres substrats on peut aussi mentionner les fibres ou les tissus. Ainsi l'invention peut être utilisée dans la protection de fibres ou de tissus par enduction de ceux-ci par des compositions comprenant un liant organique ou une résine en émulsion du type décrit précédemment et une dispersion aqueuse de cérium.

L'invention s'applique aussi aux vernis utilisés en cosmétique. De plus, l'invention s'applique avantageusement aux compositions, aux lasures notamment, réticulables aux UV, c'est à dire les lasures qui immédiatement après leur dépôt sur le substrat, notamment sur le bois, sont soumis à un traitement aux rayons ultra-violet pour leur séchage.

On notera enfin que les compositions de peintures, lasures et vernis obtenues par la mise en oeuvre de l'invention répondent aux contraintes écologiques de par le caractère non écotoxique de l'oxyde de cérium.

Les expressions « dispersion colloïdale aqueuse d'un composé de cérium » ou « dispersion aqueuse de cérium » ou « sol de cérium » désignent tout système constitué de fines particules solides d'un composé du cérium, de dimensions colloïdales, en suspension dans une phase liquide aqueuse. Ces particules peuvent, en outre, éventuellement contenir des quantités résiduelles d'ions liés ou adsorbés tels que par exemple des ions nitrates, acétates ou des ammoniums. Par dimensions colloïdales, on entend des dimensions comprises entre environ 1 nm et environ 500nm. On notera que dans une telle dispersion, le cérium peut se trouver soit totalement sous la forme de colloïdes, soit simultanément sous la forme d'ions et sous la forme de colloïdes.

Le cérium est présent dans la dispersion généralement sous forme d'oxyde et/ou d'oxyde hydraté (hydroxyde) de cérium.

Les particules de la dispersion de cérium ont de préférence une taille d'au plus 200nm, plus particulièrement d'au plus 100nm. Cette taille peut être encore plus particulièrement d'au plus 10nm. Les tailles données ici sont déterminées par comptage photométrique à partir d'une analyse par METHR (Microscopie Electronique par Transmission à Haute Résolution) complétée si nécessaire par cryo-microscopie.

Les dispersions colloïdales utilisées dans le cadre de l'invention présentent des caractéristiques spécifiques. Elles comprennent d'une part un acide spécifique et d'autre part une base qui est de l'ammoniaque ou une amine. Elles présentent enfin un pH particulier.

Comme indiqué plus haut, l'acide est un acide organique, c'est à dire qu'il comprend au moins une chaîne d'atomes de carbone, étant entendu qu'il peut toutefois comprendre des hétéroatomes. En outre, cet acide doit comprendre au moins trois fonctions acides et son troisième pK est d'au plus 10. Plus particulièrement, ce troisième pK peut être d'au plus 7.

La dispersion de l'invention peut comprendre soit un acide tel que défini ci-dessus, soit un sel de cet acide. Ce sel peut être plus particulièrement un sel alcalin.

Dans la dispersion de l'invention, l'acide est en interaction avec le cation cérium par tout type de liaison chimique. De ce fait, l'acide est donc présent sur les, ou au sein des particules de composés de cérium mais il peut aussi être présent dans la phase aqueuse.

Comme acide convenable, on peut citer tout particulièrement l'acide citrique.

Le taux d'acide dans la dispersion exprimé par le rapport moles d'acide/moles de cérium peut être compris par exemple entre 0,01 environ et 1,5 environ, plus particulièrement entre 0,2 et 0,5. Il faut noter ici que ce taux dépend de la taille des particules de la dispersion, ce taux étant d'autant plus plus faible que la taille des particules augmente. On notera ici que la limite basse de ce taux est celle en deçà de laquelle on n'a plus de stabilité de la dispersion. La limite haute dépend en fait de la solubilité de l'acide utilisé et aussi de la quantité d'acide maximale au-delà de laquelle on risque de voir la dispersion se transformer en gel.

Comme indiqué plus haut, la dispersion comprend aussi une base qui peut être l'ammoniaque mais aussi une amine. Tout type d'amine peut convenir, primaire, secondaire ou tertiaire. On notera qu'il est possible d'utiliser des amino-alcools comme par exemple le 2-amino-2-méthyl-1-propanol.

Les dispersions utilisées dans le cadre de l'invention présentent un pH d'au moins 7 et qui est de préférence compris entre 7,5 et 9,5, plus particulièrement entre 7,5 et 9. Un pH de 7,5 au moins permet d'avoir une efficacité plus grande des ingrédients utilisés classiquement dans les peintures.

Les dispersions qui conviennent pour la mise en oeuvre de l'invention peuvent être celles décrites dans la demande de brevet WO 01/38225.

On peut aussi préparer des dispersions utilisables dans le cadre de l'invention en partant de dispersions colloïdales de cérium auxquelles on ajoute un acide (par exemple l'acide citrique) et une base (ammoniaque ou amine) tels que définis plus haut de manière à obtenir la valeur de pH nécessaire. L'acide peut être ajouté à la dispersion de départ dans un premier temps puis la base dans un deuxième temps. Il est toutefois possible d'ajouter l'acide et la base simultanément. La dispersion colloïdale de départ pourra avoir été obtenue par exemple par les procédés décrits dans les demandes de brevet européens EP 206906, EP 208581, EP 316205, EP 700870 et EP 700871. On peut utiliser tout particulièrement les dispersions colloïdales obtenues par thermohydrolyse d'une solution aqueuse d'un sel de cérium IV comme un nitrate, en milieu acide notamment. Un tel procédé est décrit dans les demandes de brevet européen EP 239477 ou EP 208580. Dans cette dernière demande par exemple on prépare tout d'abord une dispersion colloïdale d'un composé de cérium IV en faisant réagir une solution aqueuse de sel de cérium IV avec une base, puis on traite thermiquement cette dispersion ce par quoi on obtient un précipité. Ce précipité peut être remis en suspension dans l'eau et donner ainsi une dispersion colloïdale qui peut être utilisée dans la présente invention après addition de l'acide et de la base comme indiqué ci-dessus.

La préparation de la composition selon l'invention se fait par simple mélange de la dispersion colloïdale avec la peinture, notamment la lasure ou le vernis. La quantité de dispersion colloïdale utilisée est fonction de la teneur

Le document WO9801392 concerne des particules de dioxyde de titane recouvertes au moins partiellement: d'une première couche d'au moins un composé du cérium et/ou du fer; et d'une deuxième couche d'au moins un oxyde, hydroxyde ou oxohydroxyde métallique. Il concerne également un procédé de préparation de ces particules et leur utilisation en tant qu'agent anti-UV. finale souhaitée en oxyde de cérium dans la composition. Cette teneur peut être quelconque. On peut noter qu'il est possible de travailler avec des teneurs élevées en cérium sans pour autant nuire à la résistance à l'eau ou à la résistance mécanique de la peinture, de la lasure ou du vernis. Généralement, on utilise une dispersion colloïdale en quantité telle que la teneur en oxyde de cérium est d'au plus 25% en poids, de préférence d'au plus 10% en poids et encore plus préférentiellement d'au plus 3% en poids par rapport à l'ensemble de la composition. Cette quantité est suffisante pour permettre d'avoir en même temps une peinture, une lasure ou un vernis qui assure une protection efficace du substrat, notamment du bois, contre les UV et qui présente une durabilité renforcée.

Des exemples vont maintenant être donnés.

Dans ces exemples on met en oeuvre les tests et le sol de cérium décrits ci-dessous.

### Colorimétrie

### Conditions de mesure :

Les mesures colorimétriques sont effectuées suivant la norme ISO 7724 à l'aide d'un spectrocolorimétre MINOLTA CM 3610D.

Les conditions de mesure sont les suivantes :
- spéculaire inclue (on mesure toute l'intensité rétrodiffusée),
- les ultraviolets sont filtrés à 100%,
- les résultats sont exprimés sous le couple illuminant/observateur C/10°.

Les mesures ont été réalisées sur des cartes à contraste, la peinture étant appliquée à 150 microns (peinture à l'état humide). Afin de mesurer la transparence, les mesures sont effectuées sur le fond noir des cartes à contraste.

### Tenue à l'eau

### Conditions de mesure :

La tenue à l'eau est évaluée par une mesure d'angle de contact entre une goutte d'eau et la peinture ou la lasure à l'aide d'un goniomètre RAME & HART. Plus l'angle de goutte est élevé, plus la peinture ou lasure est hydrophobe et donc moins sensible à l'eau. Les peintures ou lasures sont appliquées sur une carte à contraste, les peintures ou lasures sont appliquées au tire-film à une épaisseur de 150 microns.

### Vieillissement

Le test est du type QUVA. Il se fait dans les conditions suivantes:
- Conditions d'irradiation : lampe UVA avec un pic centré à 340 nm,
- Température de chambre : 60°C,
- Cycle de fonctionnement : 4 heures d'irradiation en phase sèche à une température de 60°C puis 4 heures de condensation à l'obscurité à une température de 60°C.

L'humidité est apportée en réchauffant un bac d'eau situé au fond de l'appareil (on produit donc de l'eau vapeur) puis cette eau se condense sur les plaques de peintures.

### Tenue mécanique

La tenue mécanique des lasures est mesurée de deux manières :

Une mesure de dureté du feuil de lasure est réalisée à l'aide du test de dureté Persoz. Ce test est réalisé selon la norme NFT 30-016 (peintures et vernis - mesure de la dureté d'un feuil de peinture ou de vernis à l'aide du pendule de PERSOZ). Ce test est réalisé sur les feuils de vernis appliqués à 150µm ou 300µm (peinture à l'état humide) à l'aide d'un applicateur d'épaisseur calibrée sur des plaques de verre. Le principe de caractérisation est de mesurer le temps d'amortissement d'un pendule reposant, par l'intermédiaire de deux billes d'acier, sur le feuil à étudier. La dureté est exprimée en secondes (temps d'une oscillation), ce qui correspond au nombre d'oscillations du pendule lorsque celui est incliné de 12° par rapport à la normale au départ et 4° ce qui correspond à la fin du test.

Une mesure de résistance à la rayure est réalisée à l'aide d'un scléromètre BRAIVE. Le scléromètre est un stylet muni d'une pointe en tungstène sur lequel on applique une pression variable à l'aide de ressort calibré (la pression est exprimée en grammes). La résistance à la rayure est la pression maximale (en grammes) à laquelle la pointe en tungstène du stylet ne laisse aucune trace. Ce test est réalisé sur les feuils de vernis appliqués à 150µm (peinture à l'état humide) à l'aide d'un applicateur d'épaisseur calibré sur des plaques de verre.

### Test de tenue à la méthyl-éthyl-cétone (MEC)

La réticulation en volume des feuils de vernis est testée par une tenue à la méthyl-éthyl-cétone (rub-test); on applique un coton hydrophile imbibé de solvant sur la peinture et l'on note le nombre d'allers et retours effectués avant qu'il y ait destruction de la peinture.

### Test de mesure de la vitesse de réticulation des liants alkydes par consommation d'oxygiène

La réaction de réticulation des polymères alkydes est une réaction d'oxydation avec l'oxygène de l'air. Dans le cas présent les essais sont appliqués à 150 µm humide à l'aide d'un applicateur d'épaisseur calibré sur des plaques aluminium. Ces plaques sont ensuite introduites dans un tube à essais étanche. Au bout de 24 heures, la variation du rapport volumique %O₂/%N₂ est mesurée par chromatographie phase gaz à l'aide d'un micro-chromatographe de marque microGC M200 de la société MTI. Le rapport diminue en raison de la consommation d'oxygène due à la réticulation du polymère alkyde. La vitesse de siccativation est exprimée en pourcentage de variation de ce rapport %O₂/%N₂ par rapport au %O₂/%N₂ initial par heure et par m² de vernis.

### Sol de cérium

Dans les exemples qui suivent le sol de cérium utilisé a été préparé de la manière suivante. Un précipité de CeO₂, préparé suivant l'exemple 1 de la demande de brevet EP 208580, est dispersé dans de l'eau déminéralisée, afin d'obtenir une dispersion de CeO₂. La dispersion est laissée au repos à température ambiante pendant une nuit (16 heures).

Cette dispersion présente une concentration de 103,7 g.l⁻¹ et son pH est de 1,35.

A 100 ml de cette dispersion colloïdale ainsi préparée, on additionne 5,07 g d'acide citrique solide monohydraté, qualité Prolabo Rectapur, soit un rapport en masse acide citrique monohydraté/CeO₂ de 0,49. La masse molaire de l'acide citrique monohydraté utilisée est égale à 210,14 g.mol⁻¹ et le rapport en mole acide citrique/Ce est déterminé égal à 0,40.

Le système est homogénéisé pendant 60 minutes environ. A ce dernier système, on ajoute une quantité suffisante d'ammoniaque, de concentration égale à 10,8 M, pour obtenir un pH de 8,7. La dispersion obtenue présente une concentration de l'ordre de 95 g.l⁻¹ en CeO₂.

Elle est composée de particules monodisperses de taille de l'ordre de 7-9 nm.

Pour l'ensemble des exemples l'absorbeur UV organique est le Tinuvin 1130 de la société Ciba et l'absorbeur UV minéral (oxyde de titane) est le Hombitec RM 400 de la société Sachtleben.

### EXEMPLE 1

Cet exemple concerne une lasure de formulation classique du type styrène -acrylique dont la formulation est décrite dans tableau n°1 ci-dessous :

**Tableau 1**

| produits | masse | description |
|---|---|---|
| DS913 (Rhodia) | 56,34 | latex styrène acrylique |
| eau | 11,97 | |
| monopropylene-glycol | 2,57 | plastifiant |
| Proxel GXL (Zénéca) | 0,10 | biocide |
| Tego 1488 (Goldschmidt) | 0,20 | anti-mousse |
| prémélange 1 | | |
| Rhodoline RH5210 (Rhodia) | 4,41 | agent épaississant |
| Rhodoline DP 1210 (Rhodia) | 0,31 | agent dispersant |
| Tego 1488 | 0,20 | antimousse |
| Dowanol DPnB (Degussa) | 4,11 | agent de coalescence |
| eau | 4,23 | |
| Acématt OK 412 (Degussa) | 2,40 | silice |
| prémélange 2 | | |
| Rhodoline RH5210 (Rhodia) | 1,46 | agent épaississant |
| Troysol lac (Troy) | 0,40 | agent anti-cratère |
| Woodol 100(Provigen) | 2,04 | agent anti-fongique |
| eau | 9,28 | |
| total | 100 | extrait sec massique: 28% |
| | | pH=7,2 |

La dispersion colloïdale est incorporée par simple mélange à une teneur de 1,4% en matière active (oxyde de cérium) par rapport au total de la formulation. Un absorbeur UV organique est incorporé de la même manière que précédemment à une teneur de 1% par rapport au total pour donner une formulation comparative (2). Un absorbeur UV minéral est incorporé de la même manière que précédemment à une teneur de 1,4% en matière sèche par rapport au total pour donner une formulation comparative (3).

Les formulations ainsi réalisées sont appliquées sur différents supports et subissent un conditionnement à l'air en atmosphère contrôlée (21°C +/- 2°C, 55% +/- 5% d'humidité relative) pendant une semaine avant leur évaluation.

Les résultats sont donnés dans le tableau 2 ci-dessous.

**Tableau 2**

| Formulation | Description |
|---|---|
| 1 comparative | lasure styrène-acrylique sans absorbeur UV |
| 2 comparative | lasure avec 1 % absorbeur UV organique |
| 3 comparative | lasure avec 1,4% absorbeur UV minéral |
| 4 selon l'invention | lasure avec 1,4% sol de cérium (oxyde de cérium) |

Les résultats des mesures colorimétriques sont donnés dans le tableau 3 ci-dessous.

**Tableau 3**

| | Fond noir | | |
|---|---|---|---|
| Formulation | L* | a* | b* |
| 1 comparative | 28,2 | 0,19 | -0,09 |
| 2 comparative | 28,3 | 0,17 | -0,03 |
| 3 comparative | 34,9 | -0,06 | -7,07 |
| 4 selon l'invention | 28,6 | 0,02 | -0,03 |

On constate à partir du tableau 3 que la teinte des lasures selon l'invention comprenant un sol ne subit pratiquement aucune variation.

Les résultats des mesures de tenue à l'eau sont donnés dans le tableau 4 qui suit.

**Tableau 4**

| Formulation | Angle de contact (°) |
|---|---|
| 1 comparative | 63 |
| 2 comparative | 59 |
| 3 comparative | 66 |
| 4 selon l'invention | 70 |

On note une amélioration de la tenue à l'eau pour la lasure selon l'invention comprenant un sol ce qui la rend par là même hydrophobe.

La tenue à l'eau est aussi évaluée par une mesure de changement de teinte (dE*) de la lasure après contact avec l'eau. Les essais sont évalués en colorimétrie avant et après 15 minutes de contact entre la lasure appliquée et une goutte d'eau. Plus la différence de teinte est élevée, plus la lasure est hydrophile et donc plus sensible à l'eau. Les lasures sont appliquées sur des cartes à contraste à une épaisseur de 150 µm humide; les mesures colorimétriques sont effectuées sur un fond noir.

Les résultats sont donnés dans le tableau 5 qui suit.

**Tableau 5**

| Formulation | Ecart de teinte après 15 minutes de contact |
|---|---|
| 1 comparative | 7,6 |
| 2 comparative | 9,4 |
| 3 comparative | 17,7 |
| 4 selon l'invention | 3,9 |

On note une amélioration de la tenue à l'eau pour la lasure selon l'invention comprenant un sol de cérium.

Le tableau 6 ci-dessous récapitule les résultats de tenue mécanique.

**Tableau 6**

| Formulation | Dureté PERSOZ (secondes) |
|---|---|
| 1 comparative | 30 |
| 2 comparative | 30 |
| 3 comparative | 31 |
| 4 selon l'invention | 50 |

Le produit 4 améliore nettement la tenue mécanique de la lasure.

Le tableau 7 ci-dessous récapitule les résultats de vieillissement obtenus à partir d'un test du type QUVA. Les lasures ont été appliquées sur des plaques de pin maritime à l'aide d'une brosse de façon à avoir un grammage de 325 g/m².

On note l'écart de teinte (dE*) à deux temps d'exposition : 40 cycles et 340 cycles.

**Tableau 7**

| Formulation | dE* à 40 cycles d'exposition | dE* à 340 cycles d'exposition |
|---|---|---|
| 1 comparative | 26 | 30 |
| 2 comparative | 12 | 24 |
| 3 comparative | 8 | 22 |
| 4 selon l'invention | 10 | 18 |

Les temps sont exprimés en cycles de 8 heures.

Le produit 4 améliore nettement la tenue au vieillissement de la peinture.

### EXEMPLE 2

Cet exemple concerne une lasure de formulation industrielle classique pour finition extérieure du type acrylique-polyuréthane dispersé ayant pour référence commerciale AZ930 en provenance de la société ARCH COATINGS France.

La dispersion colloïdale est incorporée par simple mélange à une teneur de 1,9% en matière active (oxyde de cérium) par rapport au total de la formulation. Un absorbeur UV organique est incorporé de la même manière que précédemment à une teneur de 1% par rapport au total pour donner la formulation comparative (6).

Les formulations ainsi réalisées sont appliquées sur différents supports et subissent un conditionnement à l'air pendant une semaine avant leur évaluation.

**Tableau 8**

| Formulation | Description |
|---|---|
| 5 comparative | lasure AZ930 sans absorbeur UV |
| 6 comparative | lasure avec 1 % absorbeur UV organique |
| 7 selon l'invention | lasure avec 1,9% sol de cérium (oxyde de cérium) |

Les résultats des mesures de tenue à l'eau sont donnés dans le tableau 9 qui suit.

**Tableau 9**

| Formulation | Angle de contact (°) |
|---|---|
| 5 comparative | 69 |
| 6 comparative | 69 |
| 7 selon l'invention | 81 |

On note une amélioration de la tenue à l'eau, voire un effet perlant pour la lasure selon l'invention comprenant un sol de cérium ce qui rend la lasure hydrophobe.

Le tableau 10 ci-dessous récapitule les résultats de tenue mécanique.

**Tableau 10**

| Formulation | Dureté PERSOZ (secondes) | Résistance à la rayure (grammes) |
|---|---|---|
| 5 comparative | 89 | 110 |
| 6 comparative | 75 | 180 |
| 7 selon l'invention | 146 | 260 |

Le produit 7 améliore nettement la tenue mécanique de la lasure.

### EXEMPLE 3

Cet exemple concerne une peinture décorative brillante classique à base de latex acrylique ayant une concentration pigmentaire volumique de 16% ainsi qu'un extrait sec massique de 49%.

La dispersion colloïdale est incorporée par simple mélange à une teneur de 1,5% en matière active (oxyde de cérium) par rapport au total de la formulation. Les formulations ainsi réalisées sont appliquées sur différents supports et subissent un conditionnement à l'air en atmosphère contrôlée (21°C +/- 2°C, 55% +/- 5% d'humidité relative) pendant une semaine avant leur évaluation.

**Tableau 11**

| Formulation | Description |
|---|---|
| 8 comparative | peinture brillante à base de latex acrylique sans absorbeur UV |
| 9 selon l'invention | peinture avec 1,5% sol de cérium (oxyde de cérium) |

Les résultats des mesures de tenue à l'eau sont donnés dans le tableau 12 qui suit.

**Tableau 12**

| Formulation | Angle de contact (°) |
|---|---|
| 8 comparative | 17 |
| 9 selon l'invention | 48 |

On note une amélioration de la tenue à l'eau pour la peinture selon l'invention comprenant un sol de cérium ce qui la rend par la moins hydrophile.

Le tableau 13 ci-dessous récapitule les résultats de tenue mécanique.

**Tableau 13**

| Formulation | Dureté PERSOZ (secondes) | Résistance à la rayure (grammes) |
|---|---|---|
| 8 comparative | 37 | 50 |
| 9 selon l'invention | 41 | 75 |

Le produit 9 améliore la tenue mécanique de la peinture.

### EXEMPLE 4

Cet exemple concerne une peinture décorative satinée classique à base de latex acrylique ayant une concentration pigmentaire volumique de 28% ainsi qu'un extrait sec massique de 53%.

La dispersion colloïdale est incorporée par simple mélange à une teneur de 1,5% en matière active (oxyde de cérium) par rapport au total de la formulation. Les formulations ainsi réalisées sont appliquées sur différents supports et subissent un conditionnement à l'air en atmosphère contrôlée (21 °C +/- 2°C, 55% +/- 5% d'humidité relative) pendant une semaine avant leur évaluation.

**Tableau 14**

| Formulation | Description |
|---|---|
| 10 comparative | peinture satinée à base de latex acrylique sans absorbeur UV |
| 11 selon l'invention | peinture avec 1,5% sol de cérium (oxyde de cérium) |

Les résultats des mesures de tenue à l'eau sont donnés dans le tableau 15 qui suit.

**Tableau 15**

| Formulation | Angle de contact (°) |
|---|---|
| 10 comparative | 59 |
| 11 selon l'invention | 67 |

On note une amélioration de la tenue à l'eau pour la peinture selon l'invention comprenant un sol de cérium ce qui la rend par là moins hydrophile.

Le tableau 16 ci-dessous récapitule les résultats de tenue mécanique.

**Tableau 16**

| Formulation | Dureté PERSOZ (secondes) | Résistance à la rayure (grammes) |
|---|---|---|
| 10 comparative | 55 | 75 |
| 11 selon l'invention | 60 | 125 |

Le produit 11 améliore la tenue mécanique de la peinture.

### EXEMPLE 5

Cet exemple concerne une peinture décorative respirante mate pour application extérieure classique à base de latex styréne-acrylique ayant une concentration pigmentaire volumique de 48% ainsi qu'un extrait sec massique de 61%.

La dispersion colloïdale est incorporée par simple mélange à une teneur de 1,5% en matière active (oxyde de cérium) par rapport au total de la formulation. Les formulations ainsi réalisées sont appliquées sur différents supports et subissent un conditionnement à l'air en atmosphère contrôlée (21 °C +/- 2°C, 55% +/- 5% d'humidité relative) pendant une semaine avant leur évaluation.

**Tableau 17**

| Formulation | Description |
|---|---|
| 12 comparative | peinture respirante mate extérieure à base de latex styrène acrylique sans absorbeur UV |
| 13 selon l'invention | peinture avec 1,5% sol de cérium (oxyde de cérium) |

Les résultats des mesures de tenue à l'eau sont donnés dans le tableau 18 qui suit.

**Tableau 18**

| Formulation | Angle de contact (°) |
|---|---|
| 12 comparative | 79 |
| 13 selon l'invention | 90 |

On note une amélioration de la tenue à l'eau, voire un effet perlant pour la peinture selon l'invention comprenant un sol de cérium ce qui la rend par là même hydrophobe.

Le tableau 19 ci-dessous récapitule les résultats de tenue mécanique.

**Tableau 19**

| Formulation | Dureté PERSOZ (secondes) | Résistance à la rayure (grammes) |
|---|---|---|
| 12 comparative | 30 | 200 |
| 13 selon l'invention | 37 | 225 |

On note pour le produit 13 une amélioration de la tenue mécanique de la peinture.

### EXEMPLE 6

Cet exemple concerne une peinture décorative respirante mate pour application intérieure classique à base de latex styréne-acrylique ayant une concentration pigmentaire volumique de 66% ainsi qu'un extrait sec massique de 61%.

La dispersion colloïdale est incorporée par simple mélange à une teneur de 1,5% en matière active (oxyde de cérium) par rapport au total de la formulation. Les formulations ainsi réalisées sont appliquées sur différents supports et subissent un conditionnement à l'air en atmosphère contrôlée (21°C +/- 2°C, 55% +/- 5% d'humidité relative) pendant une semaine avant leur évaluation.

**Tableau 20**

| Formulation | Description |
|---|---|
| 14 comparative | peinture respirante mate intérieure à base de latex styrène acrylique sans absorbeur UV |
| 15 selon l'invention | peinture avec 1,5% sol de cérium (oxyde de cérium) |

Les résultats des mesures de tenue à l'eau sont donnés dans le tableau 21 qui suit.

**Tableau 21**

| Formulation | Angle de contact (°) |
|---|---|
| 14 comparative | 93 |
| 15 selon l'invention | 103 |

On note une amélioration de la tenue à l'eau, voire un effet perlant pour la peinture selon l'invention comprenant un sol de cérium ce qui la rend par là même hydrophobe.

Le tableau 22 ci-dessous récapitule les résultats de tenue mécanique.

**Tableau 22**

| Formulation | Dureté PERSOZ (secondes) | Résistance à la rayure (grammes) |
|---|---|---|
| 14 comparative | 59 | 120 |
| 15 selon l'invention | 72 | 130 |

Le produit 15 améliore la tenue mécanique de la peinture.

### EXEMPLE 7

Cet exemple concerne une émulsion alkyde de dénomination commerciale URADIL AZ554Z50 fabriquée par la société DSM ayant un extrait sec massique de 50%.

La dispersion colloïdale est incorporée par simple mélange à une teneur de 0,35% en matière active (oxyde de cérium) par rapport au total de l'émulsion. Les formulations ainsi réalisées sont appliquées sur des plaques en verre à une épaisseur de 300 µm humide à l'aide d'un applicateur d'épaisseur calibrée et subissent un conditionnement à l'air en atmosphère contrôlée (21°C +/- 2°C, 55% +/- 5% d'humidité relative).

**Tableau 23**

| Formulation | Description |
|---|---|
| 16 comparative | émulsion URADIL AZ554Z50 sans sol de cérium |
| 17 selon l'invention | émulsion avec 0,35% sol de cérium (oxyde de cérium) |

Les résultats des mesures de dureté Persoz effectuées après 24 heures et 41 heures de séchage sont donnés dans le tableau 24 qui suit.

**Tableau 24**

| Formulation | Dureté à 24 heures | Dureté à 41 heures |
|---|---|---|
| 16 comparative | 11 | 18 |
| 17 selon l'invention | 15 | 22 |

On note une amélioration de la dureté Persoz ce qui sous-entend que le sol de cérium augmente l'état de réticulation du feuil de polymère alkyde.

Le tableau 25 ci-dessous récapitule les résultats de tenue à la méthyl-éthyl-cétone après 41 heures de séchage.

**Tableau 25**

| Formulation | Tenue à la MEC (rub-test) |
|---|---|
| 16 comparative | 2 |
| 17 selon l'invention | 6 |

Le produit 17 améliore la tenue à la méthyl-éthyl-cétone ce qui sous-entend que l'état de réticulation à coeur du polymère alkyde est amélioré par le sol de cérium.

Le tableau 26 ci-dessous récapitule les mesures de vitesse de réaction de réticulation de l'émulsion alkyde par des mesures de consommation d'oxygène.

**Tableau 26**

| Formulation | Réactivité de la siccativation (%variation %O2/%N2/h/m² lasure) |
|---|---|
| 16 comparative | 23 |
| 17 selon l'invention | 38 |

Le produit 17 à base de sol de cérium accélère la réticulation du polymère alkyde.

## Revendications

1. Composition, **caractérisée en ce qu'**elle comprend le mélange d'une peinture aqueuse et d'une dispersion colloïdale aqueuse d'un composé de cérium, cette dispersion présentant un pH d'au moins 7 et comprenant un acide organique ayant au moins trois fonctions acides et dont le troisième pK est d'au plus 10 ou un sel de cet acide, et de l'ammoniaque ou une amine.

2. Composition selon la revendication 1, **caractérisée en ce que** la peinture est une lasure, notamment une lasure réticulable aux UV.

3. Composition selon la revendication 1, **caractérisée en ce que** la peinture est à base d'une résine en émulsion de type alkyde.

4. Composition selon l'une des revendications précédentes, **caractérisée en ce que** le pH de la dispersion colloïdale est compris entre 7,5 et 9,5.

5. Composition selon l'une des revendications précédentes, **caractérisée en ce que** le rapport moles d'acide /moles de cérium est compris entre 0,01 et 1,5.

6. Composition selon l'une des revendications précédentes, **caractérisée en ce que** l'acide est l'acide citrique.

7. Composition selon l'une des revendications précédentes, **caractérisée en ce que** la teneur en cérium dans la composition, exprimée en oxyde de cérium, est d'au plus 25%, de préférence au plus 10%, en poids par rapport à l'ensemble de la composition.

8. Composition selon l'une des revendications précédentes, **caractérisée en ce que** la taille des particules de la dispersion colloïdale est d'au plus 100nm, plus particulièrement d'au plus 10nm.

9. Procédé de préparation d'une composition selon l'une des revendications précédentes, **caractérisé en ce qu'**on mélange une peinture aqueuse avec une dispersion colloïdale aqueuse d'un composé de cérium, cette dispersion présentant un pH d'au moins 7 et comprenant un acide organique ayant au moins trois fonctions acides et dont le troisième pK est d'au plus 10 ou un sel de cet acide, et de l'ammoniaque ou une amine.

10. Procédé selon la revendication 9, **caractérisé en ce que** la dispersion utilisée est obtenue par addition à une dispersion colloïdale aqueuse d'un composé de cérium de départ, de l'acide et de la base précités jusqu'à l'obtention d'un pH d'au moins 7.

## Claims

1. Composition, **characterized in that** it comprises the mixture of an aqueous paint and of an aqueous colloidal dispersion of a cerium compound, this dispersion exhibiting a pH of at least 7 and comprising an organic acid having at least three acid functional groups, the third pK of which is at most 10, or a salt of this acid, and aqueous ammonia or an amine.

2. Composition according to Claim 1, **characterized in that** the paint is a stain, in particular a UV-crosslinkable stain.

3. Composition according to Claim 1, **characterized in that** the paint is based on an emulsion resin of alkyd type.

4. Composition according to one of the preceding claims, **characterized in that** the pH of the colloidal dispersion is between 7.5 and 9.5.

5. Composition according to one of the preceding claims, **characterized in that** the moles of acid/moles of cerium ratio is between 0.01 and 1.5.

6. Composition according to one of the preceding claims, **characterized in that** the acid is citric acid.

7. Composition according to one of the preceding claims, **characterized in that** the cerium content in the composition, expressed as cerium oxide, is at most 25%, preferably at most 10%, by weight, with respect to the whole of the composition.

8. Composition according to one of the preceding claims, **characterized in that** the size of the particles of the colloidal dispersion is at most 100 nm, more particularly at most 10 nm.

9. Process for the preparation of a composition according to one of the preceding claims, **characterized in that** an aqueous paint is mixed with an aqueous colloidal dispersion of a cerium compound, this dispersion exhibiting a pH of at least 7 and comprising an organic acid having at least three acid functional groups, the third pK of which is at most 10, or a salt of this acid, and aqueous ammonia or an amine.

10. Process according to Claim 9, **characterized in that** the dispersion used is obtained by addition, to an aqueous colloidal dispersion of a starting cerium compound, of the abovementioned acid and of the abovementioned base until a pH of at least 7 is obtained.

## Patentansprüche

1. Zusammensetzung, **dadurch gekennzeichnet, dass** sie eine Mischung eines wässrigen Anstrichmittels und einer wässrigen kolloidalen Dispersion einer Cerverbindung umfasst, wobei diese Dispersion einen pH-Wert von mindestens 7 aufweist und eine organische Säure, die mindestens drei Säurefunktionen aufweist und deren dritter pK-Wert höchstens 10 beträgt, oder ein Salz dieser Säure und wässriges Ammoniak oder ein Amin umfasst.

2. Zusammensetzung nach Anspruch 1, **dadurch gekennzeichnet, dass** es sich bei dem Anstrichmittel um eine Lasur, insbesondere eine UV-vernetzbare Lasur, handelt.

3. Zusammensetzung nach Anspruch 1, **dadurch gekennzeichnet, dass** das Anstrichmittel auf einem Emulsionsharz vom Alkydtyp basiert.

4. Zusammensetzung nach einem der vorhergehenden Ansprüche, **dadurch gekennzeichnet, dass** der pH-Wert der kolloidalen Dispersion zwischen 7,5 und 9,5 liegt.

5. Zusammensetzung nach einem der vorhergehenden Ansprüche, **dadurch gekennzeichnet, dass** das Verhältnis von Molen Säure zu Molen Cer zwischen 0,01 und 1,5 liegt.

6. Zusammensetzung nach einem der vorhergehenden Ansprüche, **dadurch gekennzeichnet, dass** es sich bei der Säure um Citronensäure handelt.

7. Zusammensetzung nach einem der vorhergehenden Ansprüche, **dadurch gekennzeichnet, dass** der Cergehalt in der Zusammensetzung, ausgedrückt als Ceroxid, höchstens 25 Gew.-%, vorzugsweise höchstens 10 Gew.-%, bezogen auf die gesamte Zusammensetzung, beträgt.

8. Zusammensetzung nach einem der vorhergehenden Ansprüche, **dadurch gekennzeichnet, dass** die Größe der Teilchen der kolloidalen Dispersion höchstens 100 nm, weiter bevorzugt höchstens 10 nm, beträgt.

9. Verfahren zur Herstellung einer Zusammensetzung nach einem der vorhergehenden Ansprüche, **dadurch gekennzeichnet, dass** man ein wässriges Anstrichmittel mit einer wässrigen kolloidalen Dispersion einer Cerverbindung mischt, wobei diese Dispersion einen pH-Wert von mindestens 7 aufweist und eine organische Säure, die mindestens drei Säurefunktionen aufweist und deren dritter pK-Wert höchstens 10 beträgt, oder ein Salz dieser Säure und wässriges Ammoniak oder ein Amin umfasst.

10. Verfahren nach Anspruch 9, **dadurch gekennzeichnet, dass** die verwendete Dispersion durch Zugabe der obigen Säure und der obigen Base zu einer wässrigen kolloidalen Dispersion einer Cer-Ausgangsverbindung bis zum Erhalt eines pH-Werts von mindestens 7 erhalten wird.
